# EUROPEAN PATENT APPLICATION

(11) **EP 2 849 145 A1**
(43) Date of publication of application: **18.03.2015**
(21) Application number: 13184450.8
(22) Date of filing: 13.09.2013
(51) Int. Cl.: G06Q 50/00, G06F 17/30, H04L 29/08

(54) **Method for assessing the interest of a web content**

(71) Applicant: ALCATEL LUCENT, 92100 Boulogne-Billancourt (FR)
(72) Inventor: Ben Houidi, Zied, 91620 Nozay (FR); Scavo, Giuseppe, 91620 Nozay (FR)
(74) Representative: Camus, Olivier Jean-Claude

(57) **Abstract**

The present invention relates to method for assessing the interest of web contents, said method comprising:
- performing a test on a flux associated to a first web content, which is
•opositive if said flux comprises at least a social network feature
•negative otherwise.

## Description

### FIELD OF THE INVENTION

The present invention relates to the field of web contents: HTML documents, images, sounds, advertisements, etc. The invention relates more particularly to a method for assessing the interest of a web content.

### BACKGROUND

Nowadays, sorting, organizing and presenting interesting web content to Internet users is a challenge for Internet service providers. Indeed, Internet users are exposed to a huge amount of information, much more than what they can sort and organize by themselves. For example, millions of Tweets are added each day and dozens of hours of Youtube videos are added each minute. Therefore, there is a need for tools that help Internet users find interesting content out of this huge amount of "noise".

One of the biggest challenges is the filtering of non-interesting web content out of the big noise that is the web content traffic. In fact, even if a system makes it to detect the web content that is queried by users (as opposed to content automatically queried by applications), and even if this content is popular (which means often queried), it does not mean that this content is interesting for other users from an entertainment perspective.

What is meant by "an interesting content" is a content that is worth proposing/recommending to other users from an entertainment perspective. Examples of popular content that is not interesting from an entertainment perspective include for instance online bank services websites. Such websites are popular because a lot of users use them, but this is not the type of content interesting to present or recommend to Internet users.

A mean to identify among popular web content, those that are interesting, is therefore needed.

Some content curation websites have been developed to present directly interesting content to users, for example Reddit or Digg. These websites rely on the user action for promoting or not a web content.

However, this approach is biased precisely because it relies on user engagement. Users which do not rate contents are not taken into account, whereas if users do not rate a web content, it does not mean that this content is not interesting to them. Besides, results if such curation sites can be manipulated by a small community of users.

### SUMMARY

It is an object of the invention to provide a method for assessing the interest of web contents, which is independent of user involvement.

To this end, the invention provides a method for assessing the interest of web contents, said method comprising:
- performing a test on a flux associated to a first web content, which is
   - positive if said flux comprises at least a social network feature
   - negative otherwise.

In this method, social network metadata are leveraged. The idea is the following: if a web content (for example a web page) is rich with online social network features (for example tweet, share, or like buttons), then this web content might interest other users. In other words, if the designer of the web content decided to add a social network feature (as for example a facebook share button) on this web content, then this means that the web content is potentially shareable, and therefore potentially interesting for other users.

According to a not limited embodiment, the flux is a response to a request querying the first web content. By request is meant an HTTP GET request. The response comprises the first web content, provided by a web server. The request can be generated by a device processing the method, or simply caught by said device while observing requests transiting on a network. Social network features are searched in the HTML code of the first web content. It should be noted that in this case, the first web content is the web content the method aims at assessing the interest.

According to a not limited embodiment, the social network feature is opengraph information. The opengraph protocol has been developed by Facebook to help web pages getting integrated in "the social graph". Opengraph metadata helps, among others, the social web scrapers (for example Facebook scrapers) forming a preview of a page when it is shared in a social network.

According to another not limited embodiment, the social network feature is an element of a list of predetermined social network features. Predetermined social network features are for example share buttons, like buttons or digg buttons.

In the two previous described embodiments, the code of the first web content is parsed, looking for opengraph information (for example "og:title" metadata) or known social network features. If opengraph information or social network features is found in the code of the first web content, then the test is positive. A positive test means that the first web content is interesting. A negative test means that the first web content is not interesting.

According to a not limited embodiment, the method comprises:
- generating the request querying the first web content. In a not limited embodiment, the request querying the first web content is generated following to a preliminary request asking whether the first web content is interesting or not. Once the preliminary request is received, the request querying the first web content is generated and sent to a web server.

According to a not limited embodiment, the method comprises:
- in case of a positive test, tagging the first web content as interesting.

As previously explained, a positive test means that the first web content is interesting. A negative test means that the first web content is not interesting.

According to a not limited embodiment, the flux is a request querying the first web content and the test is performed by analyzing a referrer field of said request. Said request querying the first web content has been detected as transiting on the network, and extracted. In this case, the first web content is an object of a second web content the method aims at assessing the interest. A referrer field is a field of a request that specifies the previous web content from which the request has been issued. Indeed, once a web browser receives from a web server a HTML code of a web content (after having sent to the web server a request for this web content), the web browser starts querying the different objects that are necessary to render this web content. The referrer field of these subsequent requests specifies the initial web content. Thus, if a social network feature is requested in a request for a first web content, the referrer field of this request indicates interesting web content (which is the initial web content, previously named "second web content"). In other words, if the test performed on the request querying the first web content shows social network features, then the initial web content (the second web content) is considered as interesting.

According to a not limited embodiment, the method comprises:
- in case of a positive test, tagging a second web content specified in the referrer field of the request querying the first web content.

In addition, there is provided a device for assessing the interest of web contents, comprising:
- An active probe for generating a request querying a web content
- An active parser for performing a test on a response to said request, said response comprising the web content, said test being:
   - positive if the web content comprises at least a social network feature
   - negative otherwise.

Upon reception of a preliminary request asking whether a given web content is interesting or not, the active probe queries the web content to download it. Once the web content is received, the active parser parses the HTML code of the web content looking for at least a social network feature. In a not limited embodiment, social network features searched are opengraph information. In another not limited embodiment, social network features searched are elements of a list of predetermined social network features. If a social network feature is found, that is to say if the test is positive, then the web content is considered interesting. In a not limited embodiment, in case of a positive test, the web content is tagged as interesting.

In addition, there is provided a device for assessing the interest of web contents, comprising:
- A passive probe for detecting and extracting requests concerning a given web content
- A parser for performing a test on a request extracted by the passive probe, said test being:
   - positive if the request is relative to a social network feature
   - negative otherwise.

The passive probe is adapted for detecting and extracting requests relative to a second web page to be tested, that is to say requests querying the objects necessary to render the second web content. Besides, the passive parser is adapted for analyzing the extracted requests, looking for a social network feature.

In addition, there is provided a computer program product for a computer, comprising a set of instructions, which when loaded into said computer, causes the computer to carry out the previously described method.

### BRIEF DESCRIPTION OF THE DRAWINGS

Some embodiments of methods in accordance with embodiments of the present invention are now described, by way of example only, and with reference to the accompanying drawings, in which:
- figure 1 schematically illustrates steps of a method for assessing the interest of web contents, according to a first not limited embodiment
- figure 2 schematically illustrates a device adapted for carrying out the method of figure 1, according to a not limited embodiment
- figure 3 schematically illustrates steps of a method for assessing the interest of web contents, according to a second not limited embodiment
- figure 4 schematically illustrates steps of a method for assessing the interest of web contents, according to a third not limited embodiment.

### DESCRIPTION OF EMBODIMENTS

In the following description, well-known functions or constructions by the man skilled in the art are not described in detail since they would obscure the invention in unnecessary detail.

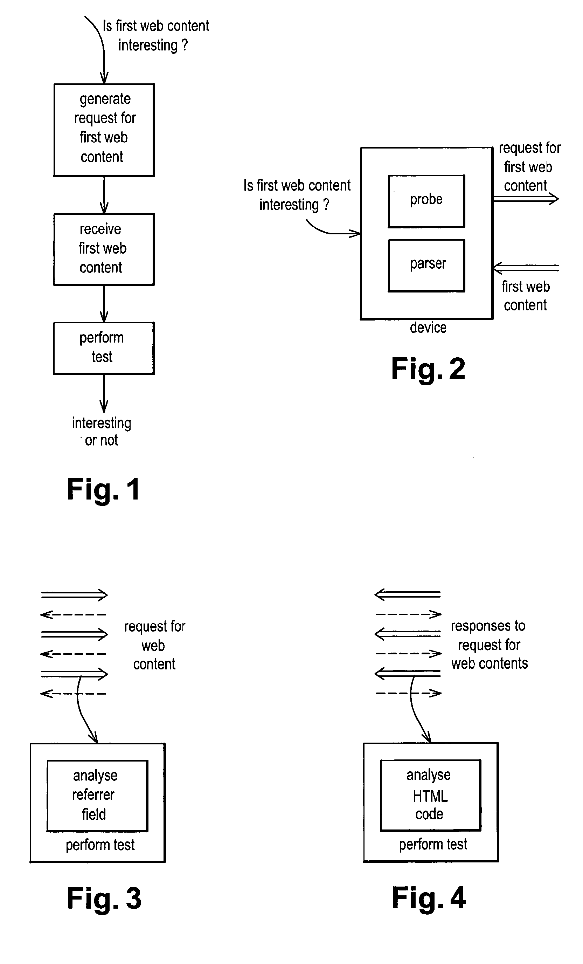

Figure 1 schematically illustrates steps of a method for assessing the interest of web contents, according to a not limited embodiment. This embodiment is named "active method". In a first step of the active method, the first web content which has to be tested is queried. The request for this first web content is generated upon reception of a preliminary request asking whether this first web content is interesting or not. Then, once the first web content is received and loaded, its code is parsed looking for social network features. In particular, the opengraph protocol information can be leveraged: the code is parsed looking for opengraph information (for example "og:title" metadata). However, any online social network information can be used: then, the code is parsed looking for known social network information, such as share buttons or like buttons. Thus, a test is performed. This test is positive if social network information has been found in the code of the first web content. If the test is positive, that is to say if social network information are present, then the first web content is considered as interesting. Otherwise, that is to say is such information is absent, the first web content is considered as not interesting. In a not limited embodiment, if the first web content is considered as interesting, then it is tagged as interesting.

Figure 2 schematically illustrates a device adapted for carrying out the previously described method (active method). The device comprises two components: an active probe and an active parser. The active probe is adapted to querying the first web content. Once the first web content is received, the active parser is adapted for parsing the code of the first web content looking for social network features.

Figure 3 and 4 schematically illustrates steps of method for assessing the interest of web contents, according to two not limited embodiments. These embodiments are named "passive methods". The passive method aims at detecting if a web content is interesting or not by passively listening to the network traffic. The observed content requests and sometimes also their responses are analyzed looking for social network features.

In a first embodiment of the passive method, illustrated in figure 3, referrer fields of requests are used. The referrer field is a field in a request that specifies the previous web content form which the request has been issued. Indeed, once a browser received HTML code of a requested web content, it starts querying the different objects that are necessary to render this web content. As a consequence, if a social network feature is requested in a request for a first web content, the field referrer of said request signals which second web content has this social network feature in its code. Thus, the second web content is considered as interesting. It should be noted that in this embodiment, requests only are processed: responses to requests are not processed.

A device adapted for carrying out the first embodiment of the passive method comprises two components: a passive probe and a passive parser. The passive probe is adapted for detecting and extracting requests relative to a second web page to be tested, that is to say requests querying the objects necessary to render the second web content. Then, the passive parser is adapted for analyzing the extracted requests, looking for a social network feature. If a request for a first web content (that is to say an object necessary to render the second web content) is about a social network feature, then the second web content is considered as interesting.

In a second embodiment of the passive method, illustrated in figure 4, instead of using the referrer field to know which objects form a given web content, this information is inferred from the content responses. By passively observing the content traffic, it is possible to associate the web content response that correspond to a given web content request. If the web content response contains any of the known social network features, or an opengraph information, then the web content is considered interesting. Otherwise, it is considered as not interesting.

It should be noted that a mixture of all the above mentioned embodiments can be used to strengthen the method. Indeed, the active and passive methods are found complementary.

## Claims

1. Method for assessing the interest of web contents, said method comprising:
- performing a test on a flux associated to a first web content, which is
• positive if said flux comprises at least a social network feature
• negative otherwise.

2. Method for assessing the interest of web contents according to claim 2, wherein the flux is a response to a request querying the first web content.

3. Method for assessing the interest of web contents according to claim 1 or claim 2, wherein the social network feature is opengraph information.

4. Method for assessing the interest of web contents according to claim 1 or claim 2, wherein the social network feature is an element of a list of predetermined social network features.

5. Method for assessing the interest of web contents according to any of the previous claims, comprising:
- Generating the request.

6. Method for assessing the interest of web contents according to any of the previous claims, comprising :
- in case of a positive test, tagging the first web content as interesting.

7. Method for assessing the interest of web contents according to claim 1, wherein the flux is a request querying the first web content and the test is performed by analyzing a referrer field of said request.

8. Method for assessing the interest of web contents according to claim 7, comprising:
- in case of a positive test, tagging as interesting a second web content specified in the referrer field of the request querying the first web content.

9. Device for assessing the interest of web contents, comprising:
- An active probe for generating a request querying a web content
- An active parser for performing a test on a response to said request, said response comprising the web content, said test being:
• positive if the web content comprises at least a social network feature
• negative otherwise.

10. Device for assessing the interest of web contents, comprising:
- A passive probe for detecting and extracting requests concerning a given web content
- A passive parser for performing a test on a request extracted by the passive probe, said test being:
• positive if the request is relative to a social network feature
• negative otherwise.

11. Computer program product for a computer, comprising a set of instructions, which when loaded into said computer, causes the computer to carry out the method for assessing the interest of a web content according to any of the claims 1 to 8.
